(19) Europäisches Patentamt
European Patent Office
Office européen des brevets

(11) **EP 3 782 345 B1**

## (12) FASCICULE DE BREVET EUROPEEN

(45) Date de publication et mention
de la délivrance du brevet:
**31.08.2022 Bulletin 2022/35**

(21) Numéro de dépôt: **19714221.9**

(22) Date de dépôt: **04.04.2019**

(51) Classification Internationale des Brevets (IPC):
**H04L 9/40** *(2022.01)* **G06F 21/55** *(2013.01)*
**H04W 4/40** *(2018.01)*

(52) Classification Coopérative des Brevets (CPC):
**H04L 63/1425; G06F 21/55; H04L 63/1458;**
H04L 63/0227

(86) Numéro de dépôt international:
**PCT/EP2019/058477**

(87) Numéro de publication internationale:
**WO 2019/201609 (24.10.2019 Gazette 2019/43)**

(54) **PROCÉDÉ DE FILTRAGE DE FLUX D´ATTAQUE VISANT UN MODULE DE CONNECTIVITÉ**

VERFAHREN ZUR FILTRIERUNG VON ANGRIFFSSTRÖMEN, DIE AUF EIN KONNEKTIVITÄTSMODUL ABZIELEN

METHOD FOR FILTERING ATTACK STREAMS TARGETTING A CONNECTIVITY MODULE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **17.04.2018 FR 1853343**

(43) Date de publication de la demande:
**24.02.2021 Bulletin 2021/08**

(73) Titulaires:
• **Renault s.a.s**
**92100 Boulogne Billancourt (FR)**
• **NISSAN MOTOR CO., LTD.**
**Yokohama-shi, Kanagawa 221-0023 (JP)**

(72) Inventeur: **PERRAUD, Eric**
**31830 PLAISANCE DU TOUCH (FR)**

(74) Mandataire: **Renault Group**
**Renault s.a.s.**
**API : TCR GRA 2 36**
**1, Avenue du Golf**
**78084 Guyancourt Cedex (FR)**

(56) Documents cités:
**US-A1- 2017 134 401     US-B1- 8 544 087**

• **Pedro Casas ET AL: "UNADA: Unsupervised
Network Anomaly Detection Using Sub-space
Outliers Ranking" In: "Serious Games", 1 janvier
2011 (2011-01-01), Springer International
Publishing, Cham 032682, XP055544974, ISSN:
0302-9743 ISBN: 978-3-642-37803-4 vol. 6640,
pages 40-51, DOI: 10.1007/978-3-642-20757-0_4,
le document en entier**
• **WEI WANG ET AL: "Autonomic intrusion
detection: Adaptively detecting anomalies over
unlabeled audit data streams in computer
networks", KNOWLEDGE-BASED SYSTEMS, vol.
70, 1 novembre 2014 (2014-11-01), pages 103-117,
XP055339858, AMSTERDAM, NL ISSN:
0950-7051, DOI: 10.1016/j.knosys.2014.06.018**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

DOMAINE TECHNIQUE AUQUEL SE RAPPORTE L'INVENTION

La présente invention concerne de manière générale la protection des modules de connectivité face aux attaques par déni de service.

Elle concerne plus particulièrement un procédé de filtrage de flux d'attaque visant un module de connectivité recevant une pluralité de flux de connexion entrant.

Elle concerne également un dispositif de filtrage d'un tel flux d'attaque.

ARRIERE-PLAN TECHNOLOGIQUE

Les attaques par déni de service (ou attaques DoS pour « *Denial of Service* » selon l'acronyme couramment utilisé) et les attaques par déni de service distribuées (ou attaques DDoS pour « *Distributed Denial of Service* » selon l'acronyme couramment utilisé) sont des attaques informatiques ayant pour but de rendre un service d'un site attaqué indisponible. Il n'est pas question dans le cadre de ces attaques de corrompre les données du site attaqué.

Ces attaques peuvent viser tous les modules de connectivité en relation avec des serveurs, en particulier des serveurs Internet.

Le module de connectivité d'un véhicule automobile est généralement connecté à un réseau privé du constructeur. Cependant, afin d'améliorer notamment les outils d'aide à la conduite ou de proposer un plus large choix dans l'offre multimédia, on envisage de connecter le module de connectivité d'un véhicule automobile à un réseau Internet public. Dans ce cas, le module de connectivité sera exposé à différentes attaques, et en particulier à des attaques par déni de service distribuées.

On connait une méthode d'apprentissage automatique (ou « *machine learning* » selon l'expression d'origine anglo-saxonne couramment utilisée) utilisée pour détecter les éventuelles attaques visant un module de connectivité, c'est-à-dire un équipement de réseau tel qu'un serveur ou un routeur par exemple. La méthode connue a été développée pour de gros équipements de réseau recevant un nombre infini de connexions entrantes et sortantes. Cette méthode vise à classifier le flux Internet entrant (ou « flux IP » avec IP pour « *Internet Protocol »)* en flux légitime et flux d'attaque.

Pour cela, la méthode repose sur la répartition graphique de paramètres caractérisant le flux entrant sur plusieurs sous-espaces. Un sous-espace est défini par la zone graphique délimitée par deux paramètres caractérisant un flux entrant. Il peut s'agir par exemple d'un graphique représentant le temps de vie moyen d'une requête (les restants des paquets IP) en fonction du nombre de sources de flux de connexion.

En conditions nominales, les paramètres du flux entrant se répartissent graphiquement en un nuage de points autour d'un point de fonctionnement alors qu'en cas d'attaque, les paramètres des flux d'attaque présentent des valeurs aberrantes et se répartissent graphiquement en des points isolés (ou « *outliers* » selon l'appellation d'origine anglo-saxonne couramment utilisée).

Selon la méthode connue, la pluralité de flux de connexion entrant est agrégée, sur une période de temps donnée, par adresse source. Les différents flux agrégés sont ensuite analysés et si une attaque est détectée (par la présence d'au moins une valeur aberrante), le flux entrant identifié comme illégitime est filtré instantanément grâce aux grandes capacités de calcul des processeurs impliqués.

Cette méthode est efficace dans le cas des équipements de réseau connectés au réseau Internet public (typiquement des serveurs) car la pluralité de flux de connexion entrant ou sortant est constituée d'un très grand nombre de connexions permettant d'extraire des statistiques fiables et que les processeurs de traitement sont puissants. Comme une attaque est généralement à l'origine d'un nombre de flux de connexion entrant qui est faible par rapport au nombre total de flux de connexion entrant, la distinction des nuages de points et des valeurs aberrantes est possible et fonctionne bien. L'état de la technique est connu, par exemple, de par le document "UNADA: Unsupervised Network Anomaly Détection Using Sub-space Outliers Ranking" (2011). Ce document décrit une méthode de détection d'anomalies sur un réseau informatique, qui s'appuie sur la détection de "clusters" et de points singuliers dans les données entrantes.

En revanche, un module de connectivité d'un véhicule automobile n'est adapté à recevoir qu'un nombre limité de connexions entrantes (en général de l'ordre d'une dizaine de connexions). Lors de l'analyse des flux entrants, les flux légitimes seraient alors noyés dans les flux d'attaque et ces derniers apparaitraient comme un nuage de points (donc comme les conditions nominales) et non plus comme des valeurs aberrantes. La solution exposée ci-dessus ne peut donc pas s'appliquer à la protection d'un module de connectivité d'un véhicule automobile.

OBJET DE L'INVENTION

La présente invention est définie par les revendications indépendantes et propose d'améliorer la détection des attaques visant des modules de connectivité, en particulier dans le cas d'un module de connectivité compris dans un véhicule automobile.

Plus particulièrement, on propose selon l'invention un procédé de filtrage de flux d'attaque tel que défini dans l'introduction, le procédé comprenant des étapes de :

- détermination d'une pluralité d'agrégats, chaque agrégat résultant de la combinaison de la pluralité de flux de connexion entrant pendant une période temporelle prédéfinie, ladite période temporelle considérée pour déterminer chaque agrégat étant différente de celle considérée pour déterminer les autres agrégats, et les périodes temporelles considérées pour déterminer la pluralité d'agrégats étant toutes comprises dans une première fenêtre temporelle d'observation,

- détermination d'une pluralité de premiers vecteurs de mesure associés chacun à l'un desdits agrégats et comprenant des valeurs de premiers paramètres caractéristiques de l'agrégat auquel il est associé,
- projection de la pluralité de premiers vecteurs de mesure sur au moins un sous-espace défini par lesdits premiers paramètres caractéristiques,
- détermination d'un autre agrégat résultant de la combinaison d'une pluralité de flux de connexion entrant pendant une autre période temporelle, ladite autre période temporelle suivant la première fenêtre temporelle d'observation,
- détermination d'un autre premier vecteur de mesure associé à l'autre agrégat et comprenant des valeurs de premiers paramètres caractéristiques de l'autre agrégat,
- projection de l'autre premier vecteur de mesure sur au moins un sous-espace défini par lesdits premiers paramètres caractéristiques,
- détermination d'un score d'anormalité en fonction du résultat de la projection de l'autre premier vecteur de mesure et de la projection de la pluralité des premiers vecteurs de mesure,

puis, si le score d'anormalité est compris dans une zone de doute quant à la présence de flux d'attaque :

- détermination d'une pluralité de deuxièmes vecteurs de mesure associés chacun à l'un desdits agrégats et comprenant des valeurs d'autres paramètres caractéristiques de l'agrégat auquel il est associé, lesdits autres paramètres caractéristiques étant distincts desdits premiers paramètres caractéristiques,
- détermination d'un autre deuxième vecteur de mesure associé à l'autre agrégat et comprenant des valeurs d'autres paramètres caractéristiques de l'autre agrégat, et
- détection de la présence ou de l'absence d'une attaque par analyse de l'autre deuxième vecteur de mesure.

Ainsi, selon l'invention, la détection d'un flux d'attaque se fait selon plusieurs phases d'implémentation distinctes limitant alors la puissance de calcul nécessaire pour l'exécution de ces phases. Cette implémentation peut donc être mise en place par des processeurs peu puissants, comme ceux intégrés dans un module de connectivité d'un véhicule.

De plus, l'utilisation d'un deuxième vecteur de mesure, défini en fonction d'autres paramètres caractéristiques distincts et indépendants des paramètres caractéristiques usuellement utilisés, permet de valider la conclusion obtenue quant à la présence ou l'absence d'une attaque visant le module de connectivité du véhicule.

D'autres caractéristiques non limitatives et avantageuses du procédé de filtrage de flux d'attaque conforme à l'invention, prises individuellement ou selon toutes les combinaisons techniquement possibles, sont les suivantes :

- pour déterminer si le score d'anormalité est compris dans une zone de doute quant à la présence de flux d'attaque, il est prévu de comparer le score d'anormalité à un premier seuil et à un deuxième seuil ;
- il est prévu de comparer le score d'anormalité avec un deuxième seuil, et si le score d'anormalité est supérieur au deuxième seuil, la présence d'une attaque est détectée sur l'autre période temporelle ;
- il est prévu de comparer le score d'anormalité avec un premier seuil et, si le score d'anormalité est inférieur au premier seuil, l'absence d'attaque est détectée sur l'autre période temporelle;
- il est également prévu les étapes suivantes :

  - définition d'une deuxième fenêtre temporelle d'observation, ladite deuxième fenêtre temporelle d'observation correspondant à la première fenêtre temporelle d'observation décalée de l'autre période temporelle,
  - détermination d'un nouvel agrégat, le nouvel agrégat résultant de la combinaison de la pluralité de flux de connexion entrant pendant une nouvelle période temporelle, ladite nouvelle période temporelle suivant la deuxième fenêtre temporelle d'observation,
  - détermination d'un nouveau premier vecteur de mesure associé au nouvel agrégat et comprenant les valeurs des premiers paramètres caractéristiques dudit nouvel agrégat,
  - suppression de la projection d'un premier vecteur de mesure associé à l'agrégat résultant de la combinaison de la pluralité de flux de connexion entrant pendant la période temporelle située dans la première fenêtre temporelle d'observation mais exclue de la deuxième fenêtre temporelle d'observation,
  - projection du nouveau premier vecteur sur au moins ledit sous-espace défini par lesdits premiers paramètres caractéristiques, et
  - détermination d'un nouveau score d'anormalité en fonction du résultat de ladite projection ;

- il est prévu à l'étape de projection, une projection de la pluralité de premiers vecteurs de mesure sur plusieurs sous-espaces, et dans lequel le score d'anormalité est déterminé à partir d'une somme de fonctions d'anormalité, une fonction d'anormalité étant déterminée par sous-espace en fonction du résultat de ladite projection de la pluralité de premiers vecteurs de mesure et de la projection l'autre premier vecteur de mesure et d'une anormalité moyenne, l'anormalité moyenne étant également déterminée à partir de ladite projection de la pluralité de premiers vecteurs de mesure et de la projection de l'autre premier vecteur de mesure ;

- il est également prévu, si la présence d'une attaque est détectée, les étapes suivantes :

  - comparaison des fonctions d'anormalité déterminées pour tous les sous-espaces,
  - sélection d'au moins un sous-espace ayant la fonction d'anormalité la plus élevée,
  - séparation de l'autre agrégat en une pluralité de flux de connexion séparés,
  - détermination d'une pluralité de vecteurs d'identification de la pluralité de flux de connexion séparés, les vecteurs d'identification comprenant les mêmes premiers paramètres caractéristiques que les premiers vecteurs de mesure,
  - projection de ladite pluralité de vecteurs d'identification sur ledit au moins un sous-espace sélectionné,
  - identification d'au moins un flux de connexion illégitime, ledit flux de connexion illégitime correspondant au flux de connexion associé à une projection anormale d'un vecteur d'identification, et
  - filtrage du flux de connexion illégitime ;

- un sous-espace est défini par un premier axe et un deuxième axe, le premier axe correspondant à un premier paramètre caractéristique et le deuxième axe correspondant à un deuxième paramètre caractéristique sélectionné parmi les premiers paramètres caractéristiques ;

- l'un au moins des premiers paramètres caractéristiques comprend l'une des données suivantes :

  - le nombre de sources de flux de connexion,
  - le nombre moyen de sources de flux de connexion par sous-réseau,
  - la proportion de requête de transmission,
  - la proportion de requête d'erreurs reçues,
  - la taille moyenne des requêtes reçues,
  - le temps de vie moyen des requêtes reçues ; et

- l'un au moins des autres paramètres caractéristiques comprend l'une des données suivantes :

  - la fréquence de succès liée à l'accès à un premier niveau de mémoire cache,
  - la fréquence de succès liée à l'accès à un deuxième niveau de mémoire cache,
  - la fréquence d'échec liée à l'accès à un autre niveau de mémoire cache, et
  - la proportion de mémoire utilisée.

L'invention propose également un dispositif de filtrage de flux d'attaque visant un module de connectivité parmi une pluralité de flux de connexion entrant, qui comporte :

- un module de détermination d'une pluralité d'agrégats, chaque agrégat résultant de la combinaison de la pluralité de flux de connexion entrant pendant une période temporelle prédéfinie, ladite période temporelle considérée pour déterminer chaque agrégat étant différente de celle considérée pour déterminer les autres agrégats, et les périodes temporelles considérées pour déterminer la pluralité d'agrégats étant toutes comprises dans une première fenêtre temporelle d'observation,
- un module de détermination d'une pluralité de premiers vecteurs de mesure associés chacun à l'un desdits agrégats et comprenant des premiers paramètres caractéristiques de l'agrégat auquel il est associé,
- un module de projection de la pluralité de premiers vecteurs de mesure sur au moins un sous-espace défini par lesdits premiers paramètres caractéristiques,
- un module de détermination d'un autre agrégat résultant de la combinaison d'une pluralité de flux de connexion entrant pendant une autre période temporelle, ladite autre période temporelle suivant la première fenêtre temporelle d'observation,
- un module de détermination d'un autre premier vecteur de mesure associé à l'autre agrégat et comprenant des valeurs de premiers paramètres caractéristiques de l'autre agrégat,
- un module de projection de l'autre premier vecteur de mesure sur au moins un sous-espace défini par lesdits premiers paramètres caractéristiques,
- un module de détermination d'un score d'anormalité en fonction du résultat de la projection de l'autre premier vecteur de mesure et de la projection de la pluralité des premiers vecteurs de mesure,
- un module de détermination adapté à déterminer, si le score d'anormalité est compris dans une zone de doute quant à la présence de flux d'attaque une pluralité de deuxièmes vecteurs de mesure associés chacun à l'un desdits agrégats et comprenant d'autres paramètres caractéristiques de l'agrégat auquel il est associé, lesdits autres paramètres caractéristiques étant distincts desdits premiers paramètres caractéristiques,
- un module de détermination d'un autre deuxième vecteur de mesure associé à l'autre agrégat et comprenant des valeurs d'autres paramètres caractéristiques de l'autre agrégat, et
- un module de détection de la présence ou de l'absence d'une attaque par analyse de l'autre deuxième vecteur de mesure.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 propose une représentation schématique de l'habitacle d'un véhicule équipé d'un dispositif de filtrage de flux d'attaque conforme à l'invention ;
- la figure 2 représente sous forme de logigramme un procédé de filtrage de flux d'attaque conforme à l'invention ;
- les figures 3 à 10 représentent huit exemples de sous-espaces utilisés pour mettre en œuvre le procédé de filtrage de flux d'attaque représenté sur la figure 2.

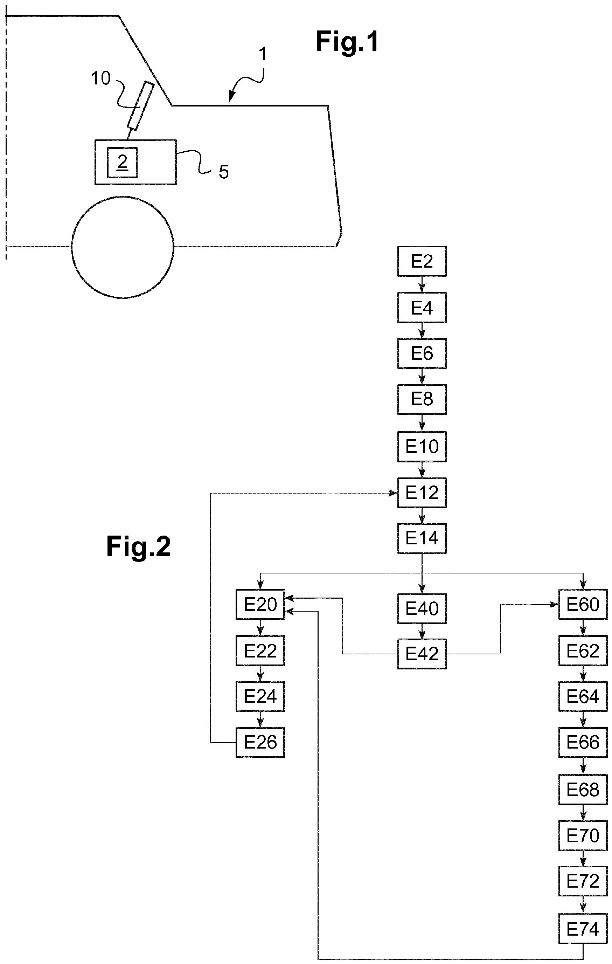

Sur la figure 1, on a représenté schématiquement l'habitacle d'un véhicule 1 automobile équipé d'un module de connectivité 5 adapté à recevoir plusieurs flux de connexion et d'un dispositif de filtrage 2 de flux d'attaque.

Les flux de connexion peuvent par exemple provenir de serveurs informatiques, permettant par exemple l'accès au réseau Internet. Le module de connectivité 5 est par exemple relié à un calculateur multimédia 10 du véhicule 1, permettant ainsi l'accès à une offre multimédia élargie pour un individu présent à l'intérieur du véhicule 1.

Le dispositif de filtrage 2 de flux d'attaque est adapté à analyser les flux de connexion reçus par le module de connectivité 5 afin d'identifier d'éventuelles attaques. Le dispositif de filtrage 2 de flux d'attaque est également adapté à filtrer les attaques détectées.

Comme représenté sur la figure 1, le dispositif de filtrage 2 de flux d'attaque est par exemple inclus dans le module de connectivité 5. De manière alternative, il peut être placé dans une entité indépendante du module de connectivité 5 mais en communication directe avec celui-ci.

Le dispositif de filtrage 2 de flux d'attaque comporte un ensemble de modules (non représentés). Ces modules peuvent en pratique être réalisés par une combinaison d'éléments matériels et d'éléments logiciels. Chaque module possède une fonctionnalité décrite dans le procédé conforme à l'invention et exposé ci-après.

La figure 2 représente, sous forme de logigramme, un exemple de procédé mis en œuvre dans le dispositif de filtrage 2 de flux d'attaque conformément à l'invention.

Le procédé débute à l'étape E2, avec la réception par le module de connectivité 5 d'une pluralité de flux de connexion entrant. Ces différents flux de connexion entrant peuvent provenir d'une seule entité source (par exemple un seul serveur informatique) ou de plusieurs entités sources distinctes.

Pour la suite du procédé, on définit une première fenêtre temporelle d'observation $\Delta t$ pendant laquelle les étapes du procédé vont être mises en œuvre. Cette première fenêtre temporelle d'observation est par exemple de l'ordre de 5 s.

Cette première fenêtre temporelle d'observation est divisée en périodes temporelles $\delta t_i$ successives. Dans le cadre de cette invention, les périodes temporelles $\delta t_i$ sont identiques. La période temporelle $\delta t_i$ utilisée est par exemple de l'ordre de 100 millisecondes (la première fenêtre temporelle d'observation est donc constituée de 50 périodes temporelles distinctes successives). La période temporelle $\delta t_i$ correspond à la période temporelle pendant laquelle l'ensemble des flux de connexion entrants sont analysés afin de savoir si une attaque par déni de service distribuée est présente.

A l'étape E4, l'ensemble des flux de connexion entrant pendant une période temporelle $\delta t_i$ sont combinés afin d'obtenir un seul flux appelé « agrégat ». A l'étape E4, il est donc obtenu un agrégat par période temporelle (une cinquantaine d'agrégats est donc obtenue sur l'ensemble de la première fenêtre temporelle d'observation $\Delta t$).

En pratique, chaque flux de connexion contient une succession de données, en particulier des données permettant l'accès au réseau. La combinaison de l'ensemble des flux de connexion entrant consiste alors à regrouper l'ensemble des données contenues dans tous les flux de connexion dans un seul flux (appelé « agrégat » dans cette description).

Un agrégat est défini par l'intermédiaire d'un premier vecteur de mesure comprenant plusieurs mesures. Par exemple, sur une période temporelle $\delta t_i$, le premier vecteur de mesure $X_i$ associé s'écrit $X_i = [x_{i,n}]$ avec $x_{i,n}$ une variable qui correspond à une mesure n pendant la période temporelle $\delta t_i$. Chaque variable $x_{i,n}$ est calculée différemment en fonction du type de donnée étudiée.

Par exemple, la variable $x_{i,n}$ peut être évaluée en calculant la moyenne de la donnée considérée sur la période temporelle $\delta t_i$. C'est par exemple le cas pour obtenir la taille moyenne des requêtes reçues (nommées également paquets IP reçus de manière usuelle) en calculant la moyenne de la taille de l'ensemble des requêtes reçues pour l'ensemble des connexions pendant la période temporelle $\delta t_i$.

Dans l'exemple du nombre de sources, la variable $x_{i,n}$ est déterminée à partir du nombre d'adresses sources différentes reçues pendant la période temporelle $\delta t_i$.

Dans l'exemple du nombre de sources moyen par sous-réseau, la variable $x_{i,n}$ est déterminée à partir du nombre d'adresses sources différentes reçues pendant la période temporelle $\delta t_i$ et du nombre de sous-réseaux (noté $N_r$ ci-dessous) parmi les requêtes reçues pendant la période temporelle $\delta t_i$. En pratique, on considère uniquement les 24 premiers bits de l'adresse source (cette adresse source est notée IP/24). Puis, pour chaque adresse source IP/24, le nombre de sources différentes et le nombre de requêtes reçues (ou paquets IP reçus) sont déterminés. Finalement, le nombre de sources moyen par sous-réseau (noté $N_{s/r}$ dans la formule ci-dessous) est obtenu en pondérant le nombre de sources différentes par adresse source IP/24 (noté $N_s$ dans la formule suivante) par le nombre de requêtes reçues par adresse source IP/24 (noté $N_p$ dans la formule suivante) :

$$N_{s/r} = \frac{\sum_{sous-réseau\ i} N_s \times N_p}{N_r}$$

En ce qui concerne la proportion de requêtes de transmission reçues (également nommée proportion de requête de connexion TCP pour « Transmission Control Protocol »), la variable $x_{i,n}$ est déterminée comme le rapport entre le nombre de requêtes de transmission reçues pendant la période temporelle $\delta t_i$ et le nombre total de requêtes reçues.

Dans l'exemple de la proportion de requêtes d'erreur reçues (également appelée proportion de paquets relevant du protocole ICMP pour « Internet Control Message Protocol »), la variable $x_{i,n}$ est définie comme étant le rapport entre le nombre de requêtes d'erreur reçues pendant la période temporelle $\delta t_i$ et le nombre total de requêtes reçues.

Comme cela est visible sur la figure 2, le procédé se poursuit à l'étape E6. Lors de cette étape, pour chaque agrégat obtenu (pour chaque période temporelle de la première fenêtre temporelle d'observation), on détermine le premier vecteur de mesure $X_i$. Ce premier vecteur de mesure $X_i$ caractérise l'agrégat auquel il est associé par l'intermédiaire de paramètres caractéristiques.

Ces paramètres caractéristiques permettent de caractériser le flux de communication Internet reçu (ou IP pour « *Internet Protocol* » selon l'appellation couramment utilisée). Ce flux de connexion reçu dépend en particulier du type de connexions en cours ou du type de données qui sont transmises via ce flux de connexion. Parmi ces paramètres caractéristiques, on distingue par exemple : le nombre de sources de flux de connexion (paramètre noté $x_1$ ci-après), le nombre moyen de sources par sous-réseau (paramètre noté $x_2$), la proportion de requête de transmission de données (usuellement déterminée par les paquets TCP, paramètre noté $x_3$), la proportion de requête de contrôle et d'erreurs (usuellement appelée paquets ICMP, paramètre noté $x_4$), la taille moyenne des requêtes transmises (usuellement déterminée à partir des paquets IP reçus, paramètre noté $x_5$), le temps de vie moyen des requêtes (ou paquets IP reçus) lors du transfert de données (ou TTL pour « *Time to Live* » selon l'appellation d'origine anglo-saxonne couramment utilisée) ou encore le nombre de sous-réseaux.

Ces paramètres caractéristiques sont discriminants pour permettre l'identification d'une attaque distribuée de déni de service sur un module de connectivité.

Ici, le premier vecteur de mesure $X_i$ comprend les cinq paramètres notés $X_1, X_2, X_3, X_4, X_5$.

A l'issue de l'étape E6, un premier vecteur de mesure $X_i$ est déterminé par période temporelle $\delta t_i$ et donc une pluralité de premiers vecteurs de mesure $X_i$ est obtenue sur la première fenêtre temporelle d'observation $\Delta t$. Ainsi, par exemple, pour une période temporelle de 100 ms et une première fenêtre temporelle d'observation de 5 s, on obtient 50 premiers vecteurs de mesure.

Ces premiers vecteurs de mesure $X_i$ sont utilisés dans la suite du procédé à l'étape E8. Les paramètres caractéristiques permettent de définir des sous-espaces de projection. Un sous-espace est défini comme étant une grille de cellules. Pour cette grille, le premier axe, par exemple l'axe des abscisses, correspond à un premier paramètre caractéristique et le second axe, par exemple l'axe des ordonnées, correspond à un deuxième paramètre caractéristique. En pratique, les paramètres caractéristiques pris deux à deux permettent de définir une pluralité de sous-espaces à deux dimensions. En variante, on pourrait aussi considérer des sous-espaces comprenant davantage de dimensions.

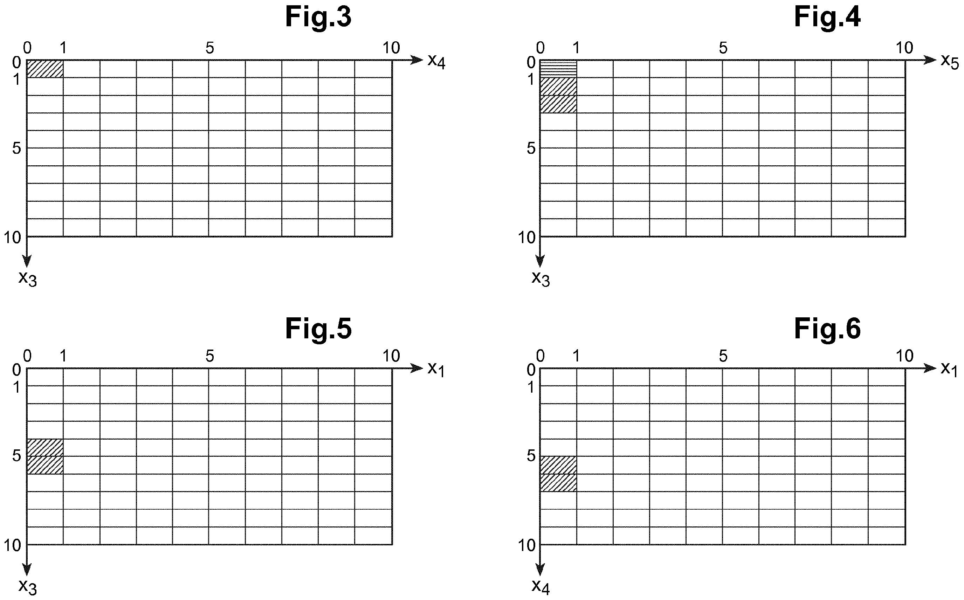

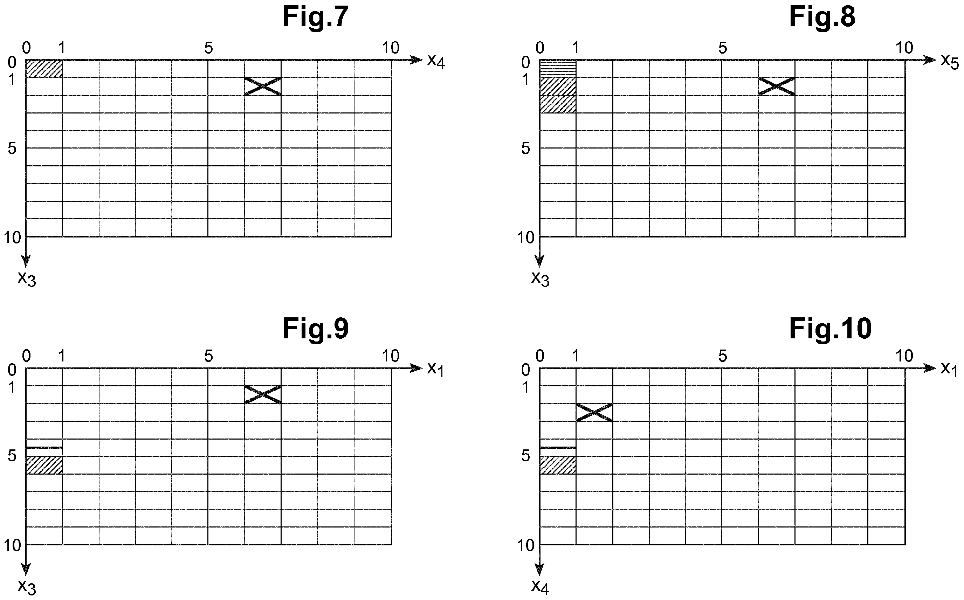

Les figures 3 à 10 représentent des sous-espaces obtenus à partir des paramètres caractéristiques introduits précédemment. Ici, chaque sous-espace est défini comme une grille de 10 cellules par 10 cellules. Les figures 3 et 7 représentent par exemple le sous-espace correspondant à la proportion de requête de transmission de données ($x_3$) en fonction de la proportion de requête de contrôle et d'erreurs ($x_4$). Les figures 4 et 8 représentent le sous-espace correspondant à la proportion de requête de transmission de données ($x_3$) en fonction de la taille moyenne des requêtes transmises (ou paquets IP reçus) (xs). Les figures 5 et 9 représentent le sous-espace correspondant à la proportion de requête de transmission de données ($x_3$) en fonction du nombre de sources de flux de connexion ($x_1$). Les figures 6 et 10 représentent la proportion de requête de contrôle et d'erreurs ($x_4$) en fonction du nombre de sources de flux de connexion ($x_1$).

A l'étape E8, les premiers vecteurs de mesure $X_i$ sont projetés dans les sous-espaces définis par les paramètres caractéristiques. Tous les premiers vecteurs de mesure $X_i$ obtenus sur la première fenêtre temporelle d'observation $\Delta t$ sont projetés sur ces sous-espaces. Par projection, on entend l'identification de la cellule de la grille dans laquelle se trouve la valeur du premier vecteur de mesure $X_i$ projeté. En d'autres termes, pour un sous-espace défini à partir de deux données n et m, la projection correspond à l'identification de la cellule de la grille dans laquelle se trouve le point ($x_{i,n}$; $x_{i,m}$) du premier vecteur de mesure $X_i$.

En pratique, avant la projection, les premiers vecteurs de mesure $X_i$ sont normalisés afin d'effectuer une comparaison pertinente des paramètres caractéristiques. Ici, chacun des paramètres caractéristiques des premiers vecteurs de mesure $X_i$ sont normalisés par une valeur prédéfinie du paramètre en question. Les valeurs prédéfinies utilisées correspondent par exemple aux valeurs raisonnablement maximales des paramètres caractéristiques. La notion « maximale » est définie par rapport au flux de connexion limite qu'un module de connectivité présent dans un véhicule automobile peut recevoir. Par exemple, pour la taille moyenne des requêtes transmises (ou paquets IP reçus), paramètre noté $x_5$, la valeur 1500 sera utilisée comme valeur de normalisation pour la version IPv4 du protocole IP. La valeur 8000 sera utilisée comme valeur de normalisation pour la version IPv6 du protocole IP.

Les figures 3 à 10 représentent des exemples de projection des premiers vecteurs de mesure $X_i$ sur différents sous-espaces pour la première fenêtre temporelle d'observation $\Delta t$. A l'issue des projections des premiers vecteurs de mesure $X_i$, les cellules sont vides si aucun premier vecteur de mesure $X_i$ n'a été projeté dans la cellule en question.

On définit la densité des cellules comme correspondant à la proportion de premiers vecteurs de mesure $X_i$ projetés dans celles-ci. Une cellule est dite dense si la proportion de premiers vecteurs de mesure $X_i$ projetés dans celle-ci est supérieure à une proportion prédéfinie. La proportion prédéfinie est par exemple égale à 5%.

Plusieurs cellules denses adjacentes peuvent définir un nuage de points (ou « *cluster»* selon le terme d'origine anglo-saxonne couramment utilisé). Par « cellules adjacentes », on entend les cellules ayant une arête en commun. Sur les figures 3 à 10, les nuages de points tels que définis ci-dessus sont symbolisés par les cellules comprenant des hachures obliques. Par exemple, d'après la figure 3, toutes les projections des premiers vecteurs de mesure $X_i$ sur ce sous-espace se concentrent dans une seule cellule.

Les hachures horizontales, présentes par exemple sur les figures 4, 8, 9 et 10, symbolisent des cellules non vides mais dont la densité est inférieure à la proportion prédéfinie (inférieure ici à 5%). Plus le nombre de hachures horizontales est élevé, plus la densité de la cellule est grande (tout en restant inférieure à la proportion prédéfinie).

Les croix présentes sur les figures 7 à 10 indiquent la présence d'une attaque (la détection d'une attaque est détaillée ci-après).

Comme visible sur la figure 2, le procédé se poursuit ensuite à l'étape E10. Lors de cette étape, un score d'anormalité $S(X)$ à partir de chaque sous-espace sur lequel on a projeté les premiers vecteurs de mesure $X_i$ est déterminé.

Dans un sous-espace (noté dans la suite sous-espace k), l'anormalité $\alpha(j, k)$ d'un point est définie comme étant la distance entre la cellule j dans laquelle se trouve ce point et le nuage de points le plus proche. En d'autres termes, l'anormalité $\alpha(j, k)$ correspond à la distance entre la cellule j et la (ou les) cellule(s) dense(s) (dont la proportion de premiers vecteurs de mesure $X_i$ projetés est supérieure à 5%) la(les) plus proche(s). Le calcul de distance s'effectue selon la définition de la distance euclidienne ou de la distance de Mahalanobis.

Dans le cas où un point est dans un nuage de points, l'anormalité $\alpha(j, k)$ est nulle. Dans le cas où aucun nuage de points n'est présent sur le sous-espace considéré (c'est-à-dire qu'aucune cellule ne présente par exemple plus de 5% des premiers vecteurs de mesure projetés), l'anormalité $\alpha(j,k)$ correspond à la distance entre la cellule j et la cellule présentant la plus grande densité (mais étant inférieure à 5%) dans le sous-espace k considéré.

A partir de l'anormalité $\alpha(j,k)$ définie pour chaque cellule j d'un sous-espace k, il est possible de déterminer l'anormalité moyenne $A(k)$ sur l'ensemble des cellules j du sous-espace k considéré. L'anormalité moyenne s'écrit :

$$A(k) = \frac{\sum_j \alpha(j, k) \times Dens(j, k)}{n}$$

avec $\alpha(j,k)$ qui correspond à l'anormalité (définie précédemment) de la cellule j dans le sous-espace k, *Dens(j, k)* qui correspond à la densité de la cellule j dans le sous-espace k et *n* qui représente le nombre de cellules du sous-espace k.

D'après cette définition, plus l'anormalité moyenne $A(k)$ est proche de 0, plus les points (correspondant aux projections des premiers vecteurs de mesure $X_i$), sur la première fenêtre d'observation temporelle $\Delta t$, se répartissent selon des nuages de points concentriques. A titre d'exemple, l'anormalité moyenne évaluée sur le sous-espace représenté sur la figure 3 est nulle puisque tous les points se répartissent dans un unique nuage de points. Il en est de même pour le sous-espace représenté sur la figure 5 et le sous-espace de la figure 6.

En revanche, plus l'anormalité moyenne $A(k)$ est grande, plus les points sont uniformément répartis sur le sous-espace considéré.

Pour déterminer le score d'anormalité $S(X)$, une fonction d'anormalité $F(X, k)$ d'un premier vecteur de mesure $X_i$ dans le sous-espace k est introduite :

$$F(X, k) = \frac{\alpha(X_k, k)}{A(k)}$$

avec $\alpha(X_k, k)$ qui représente l'anormalité de la projection $X_k$ du premier vecteur de mesure $X_i$ sur le sous-espace k. L'anormalité moyenne $A(k)$ permet ici la normalisation de l'anormalité $\alpha(X_k, k)$ de la projection $X_k$ du premier vecteur de mesure $X_i$ considéré dans le sous-espace k (afin de permettre de traiter équitablement tous les sous-espaces).

A partir de ces fonctions d'anormalité $F(X, k)$, il est possible de définir un score d'anormalité $S(X)$ pour le premier vecteur de mesure $X_i$ en sommant sur tous les sous-espaces l'ensemble des fonctions d'anormalité

$F(X,k)$ déterminées sur ce sous-espace k :

$$S(X) = \sum_k F(X,k).$$

Le score d'anormalité $S(X)$ correspond donc à la somme des fonctions d'anormalité $F(X, k)$ obtenues pour les projections du premier vecteur de mesure $X_i$ sur les différents sous-espaces.

Le procédé se poursuit ensuite à l'étape E12 dans laquelle est définie une nouvelle période temporelle $\delta t_{N+1}$. La nouvelle période temporelle $\delta t_{N+1}$ est la période temporelle qui suit immédiatement la première fenêtre d'observation temporelle $\Delta t$.

L'ensemble des flux de connexion entrants pendant la nouvelle période temporelle $\delta t_{N+1}$ sont combinés afin d'obtenir un nouvel agrégat (selon une méthode similaire à celle effectuée à l'étape E4 précédemment décrite).

Un nouveau premier vecteur de mesure $X_{N+1}$ comprend les paramètres caractéristiques de ce nouvel agrégat.

Le score d'anormalité $S(X_{N+1})$ déterminé pour le nouveau premier vecteur $X_{N+1}$ selon la méthode décrite précédemment est la grandeur qui va permettre de renseigner sur la présence ou l'absence de flux d'attaque parmi les flux de connexion étant entrés sur le module de connectivité 5 pendant la fenêtre temporelle $\delta t_{N+1}$. Ce score d'anormalité $S(X_{N+1})$ mesure le degré d'anormalité de l'ensemble des flux de connexion reçus pendant la période temporelle $\delta t_{N+1}$ (et caractérisés par le nouvel agrégat) par rapport à la première fenêtre temporelle d'observation $\Delta t$ (précédant la période temporelle $\delta t_{N+1}$).

D'un point de vue graphique, si ce score d'anormalité $S(X_{N+1})$ est élevé, cela signifie que les projections du nouveau premier vecteur de mesure $X_{N+1}$ sur les différents sous-espaces s'écartent de manière significative des nuages de points constitués pendant la première période d'observation $\Delta t$ et identifiés sur les différents sous-espaces à l'étape E8. L'ensemble des flux de connexion correspondant au nouvel agrégat paraît suspect et il est nécessaire d'approfondir l'analyse pour confirmer ou infirmer la présence d'une attaque.

Pour cela, à l'étape E14, le score d'anormalité $S(X_{N+1})$ est comparé à un premier seuil $th_1$ et à un deuxième seuil $th_2$. Le premier seuil $th_1$ est inférieur au deuxième seuil $th_2$. Trois cas distincts sont mis en évidence.

Le premier cas correspond à un score d'anormalité $S(X_{N+1})$ inférieur au premier seuil $th_1$. Dans ce cas, l'absence d'attaque est détectée sur la nouvelle fenêtre temporelle $\delta t_{N+1}$ et le procédé se poursuit à l'étape E20. Il s'agit des exemples représentés sur les figures 3 à 6 dans lesquelles toutes les projections sont concentrées sur des cellules denses adjacentes ou à densité élevée (figure 4). Sur ces figures, aucune valeur isolée n'est identifiée par le calcul des scores d'anormalité.

A l'étape E20, on définit une deuxième fenêtre temporelle d'observation $\Delta t'$. Cette deuxième fenêtre temporelle d'observation $\Delta t'$ correspond à la première fenêtre temporelle d'observation $\Delta t$ décalée d'une période temporelle $\delta t_i$. En d'autres termes, la première fenêtre temporelle d'observation $\Delta t$ est glissante et on l'incrémente d'une période temporelle $\delta t_i$ pour définir la deuxième fenêtre temporelle d'observation $\Delta t'$. Cette deuxième fenêtre temporelle d'observation $\Delta t'$ intègre le nouveau premier vecteur de mesure $X_{N+1}$. Finalement, les deux fenêtres temporelles d'observation ont donc en commun une pluralité de périodes temporelles. La première période temporelle de la première fenêtre temporelle d'observation (appelée ancienne période temporelle dans la suite) n'est pas incluse dans la deuxième fenêtre temporelle d'observation $\Delta t'$. Et, la dernière période temporelle de la deuxième fenêtre temporelle d'observation $\Delta t'$ (appelée nouvelle période temporelle $\delta t_{N+1}$ précédemment) n'est pas incluse dans la première fenêtre temporelle d'observation $\Delta t$.

Sur les sous-espaces considérés à l'étape E8, on supprime la projection du premier vecteur de mesure correspondant à l'ancienne période temporelle à l'étape E22.

A l'étape E24, on projette le nouveau premier vecteur de mesure $X_{N+1}$ sur ces sous-espaces. Les nuages de points présents sur ces sous-espaces sont à nouveau identifiés selon la méthode proposée à l'étape E8. Les étapes E22 et E24, en s'appuyant sur les résultats obtenus préalablement dans le procédé, permettent de limiter le temps d'exécution du procédé. Elles permettent également de limiter les puissances de calcul (en particulier d'un processeur contenu dans le dispositif de filtrage 2 de flux d'attaque) nécessaire dans l'exécution d'un tel procédé.

Comme représenté sur la figure 2, le procédé se poursuit à l'étape E26 avec la détermination des anormalités moyennes $A(k)$ lorsque le nouveau premier vecteur de mesure $X_{N+1}$ a été projeté sur tous les sous-espaces considérés et que le premier vecteur de mesure associé à l'ancienne période temporelle a été supprimé.

Le procédé reprend ensuite en boucle depuis l'étape E12.

Le deuxième cas de comparaison correspond à un score d'anormalité supérieur au deuxième seuil $th_2$. Dans ce cas, la présence d'une attaque est détectée sur la nouvelle période temporelle $\delta t_{N+1}$ et le procédé se poursuit à l'étape E60.

Ce deuxième cas correspond aux exemples représentés sur les figures 7 à 10. Les scores d'anormalité calculés pour ces exemples se sont révélés élevés.

Cette étape E60 permet de comparer les fonctions d'anormalité $F(X,k)$ déterminés à l'étape E10 pour le nouveau premier vecteur de mesure $X_{N+1}$.

Parmi tous les sous-espaces considérés, au moins deux sous-espaces sont sélectionnés, à l'étape E62. En pratique, un ou deux sous-espaces sont sélectionnés. Il s'agit des sous-espaces ayant les fonctions d'anormalité $F(X,k)$ les plus élevées. C'est ensuite à partir de l'étude réalisée sur ces sous-espaces sélectionnés qu'est (ou sont) identifié(s) le (ou les) flux d'attaque en utilisant notamment les nuages de points présents sur les sous-espaces sélectionnés (et qui caractérisent des conditions nominales de fonctionnement) sur la première fenêtre temporelle d'observation $\Delta t$ (et précédant la nouvelle période temporelle $\delta t_{N+1}$). A titre d'exemple, sur les figures 7 à 10, les nuages de points sont identifiés par des hachures obliques (comme décrit précédemment).

Pour permettre l'identification du flux d'attaque, le nouvel agrégat, issu de la combinaison d'une pluralité de flux entrant pendant la nouvelle période temporelle $\delta t_{N+1}$ réalisée à l'étape E12, est décomposé en une pluralité de flux de connexion dits séparés à l'étape E64. La combinaison effectuée à l'étape E12 considérait l'ensemble des flux de connexion entrants pendant la nouvelle période temporelle $\delta t_{N+1}$ sur le module de connectivité 5 pour déterminer le nouvel agrégat. La séparation de ce nouvel agrégat se fait en combinant les flux de connexion reçus par adresse source pendant la nouvelle période temporelle $\delta t_{N+1}$. Il est donc possible de définir une pluralité d'agrégats séparés considérés comme suspects. En pratique, il y a autant d'agrégats séparés qu'il y a d'adresses sources.

A l'étape E66, chacun des agrégats séparés est caractérisé par un vecteur dit d'identification. Ces vecteurs d'identification sont construits à partir des paramètres identifiés à l'étape E62 par la sélection des sous-espaces. Les vecteurs d'identification comprennent donc un nombre restreint de paramètres par rapport par exemple au nouveau premier vecteur de mesure $X_{N+1}$ défini précédemment. Par exemple, si seul le sous-espace défini par les paramètres $x_3$ et $x_5$ a été sélectionné à l'étape E62, les vecteurs d'identification comprendront ces deux paramètres uniquement (ces deux paramètres étant déterminés par agrégat séparé pendant la nouvelle période temporelle $\delta t_{N+1}$).

Ces vecteurs d'identification sont ensuite projetés sur le ou les sous-espaces sélectionnés, à l'étape E68. Lorsque ces vecteurs d'identification se projettent dans les cellules des sous-espaces constituant un nuage de points, le flux de connexion séparé associé n'est pas considéré comme un flux d'attaque. En revanche, si un vecteur d'identification se projette en dehors d'un nuage de points, l'agrégat séparé est assimilé à une attaque.

A l'issue de cette étape, l'attaque est identifiée sur les sous-espaces. Sur les figures 7 à 10, elle est symbolisée par les cellules contenant une croix.

Par construction, l'agrégat séparé correspondant à une attaque est associé à un ensemble de flux de connexion séparés provenant de la même adresse source. La détection de l'agrégat séparé correspondant à une attaque permet alors l'identification d'une adresse source générant des flux de connexion dits illégitimes à l'étape E70.

Ces flux de connexion illégitimes sont alors filtrés à l'étape E72 du procédé. Le filtrage est par exemple réalisé en bloquant les flux de connexion illégitimes à l'entrée du module de connectivité 5. En pratique, le blocage s'effectue par exemple en ajoutant l'adresse source associée aux flux de connexion illégitimes dans la liste des adresses sources interdites. Toute requête provenant de cette adresse source est alors détruite.

A l'étape E74, une fois les flux de connexion illégitimes filtrés, les flux de connexion séparés sont à nouveau combinés pour former un agrégat dit filtré et un premier vecteur de mesure filtré $X_f$ associé est déterminé. Ce premier vecteur de mesure filtré $X_f$ est projeté sur tous les sous-espaces considérés. Et, comme le flux d'attaque a été filtré (il n'y a donc plus d'attaque détectée sur la nouvelle période temporelle), le procédé se poursuit à l'étape E20 décrite précédemment (et correspondant à la suite du procédé lorsqu'aucune attaque n'était détectée).

Le troisième cas de comparaison du score d'anormalité $S(X)$ au premier seuil $th_1$ et au deuxième seuil $th_2$ correspond à un score d'anormalité $S(X)$ compris dans une zone de doute. Cette zone de doute est définie pour un score d'anormalité $S(X)$ compris entre le premier seuil $th_1$ et le deuxième seuil $th_2$. Dans ce cas, aucune conclusion ne peut être obtenue directement quant à la présence ou l'absence d'une attaque sur la nouvelle période temporelle $\delta t_{N+1}$. Le procédé se poursuit alors à l'étape E40.

Lors de cette étape E40, pour chaque agrégat obtenu à l'étape E4 (pour chaque période temporelle $\delta t_i$ de la première fenêtre temporelle d'observation $\Delta t$), un deuxième vecteur de mesure $Y_i$ est déterminé. Ce deuxième vecteur de mesure $Y_i$ caractérise l'agrégat auquel il est associé par l'intermédiaire d'autres paramètres caractéristiques. Ces autres paramètres caractéristiques sont distincts des paramètres caractéristiques associés aux premiers vecteurs de mesure $X_i$.

Ces autres paramètres caractéristiques permettent cette fois de caractériser, non plus le flux de connexion IP, mais plutôt l'exécution des logiciels embarqués dans le dispositif de filtrage 2 de flux d'attaque. Ces autres paramètres caractéristiques permettent en particulier de décrire la dispersion des instructions et des données par rapport aux différents niveaux de mémoire inclus dans le dispositif de filtrage 2 d'un flux d'attaque. Parmi ces autres paramètres caractéristiques, on distingue par exemple : la fréquence de succès liée à l'accès à un premier niveau de mémoire cache (usuellement mesurée par le « hit rate » de la mémoire cache « instructions » et « données » de niveau 1), la fréquence de succès liée à l'accès à un deuxième niveau de mémoire cache (usuellement mesurée par le « hit rate » de la mémoire cache unifiée de niveau 2), la fréquence d'échec liée à un troisième niveau de mémoire cache ou encore la proportion de mémoire utilisée.

Ces paramètres caractéristiques sont connus pour caractériser l'exécution d'un logiciel sur un processeur donné.

A l'issue de l'étape E40, un deuxième vecteur de mesure $Y_i$ est déterminé par période temporelle $\delta t_i$ et

donc une pluralité de deuxièmes vecteurs de mesure $Y_i$ sont obtenus sur la première fenêtre temporelle d'observation $\Delta t$. Ainsi, par exemple, pour une période temporelle de 100 ms et une première fenêtre temporelle d'observation de 5 s, on obtient 50 deuxièmes vecteurs de mesure.

Ces deuxièmes vecteurs de mesure $Y_i$ sont utilisés dans la suite du procédé à l'étape E42 dans laquelle ils sont analysés pour permettre de lever le doute quant à la détection de présence ou d'absence d'une attaque.

L'analyse des deuxièmes vecteurs de mesure $Y_i$ a pour but de repérer des opérations anormales dans l'exécution du logiciel.

De la même façon que pour le premier vecteur de mesure $X_i$ lors de l'étape E6, les deuxièmes vecteurs de mesure $Y_i$ sont projetés sur des sous-espaces à deux dimensions. Il est également possible d'identifier des nuages de points et de déterminer une autre anormalité moyenne par sous-espace $B(k)$ (sur le même principe que la détermination de l'anormalité moyenne $A(k)$).

Lorsque les étapes précédentes du procédé identifient un doute quant à la présence d'une attaque pendant la nouvelle période temporelle $\delta t_{N+1}$ à partir de l'analyse du nouveau premier vecteur $X_{N+1}$, un autre score d'anormalité $S(Y_{N+1})$, pour un nouveau deuxième vecteur de mesure $Y_{N+1}$ associé à la nouvelle période temporelle $\delta t_{N+1}$ est calculé selon la méthode décrite précédemment.

Cet autre score d'anormalité $S(Y_{N+1})$ est ensuite comparé à un troisième seuil $th_3$. Si l'autre score d'anormalité $S(Y_{N+1})$ est supérieur au troisième seuil $th_3$, la présence d'une attaque pendant la nouvelle période temporelle $\delta t_{N+1}$ est confirmée.

Comme représenté sur la figure 2, à la suite de cette étape E42, si l'absence d'une attaque est détectée, le procédé se poursuit à l'étape E20 décrite précédemment. Dans le cas où à l'issue de l'analyse des deuxièmes vecteurs de mesure, la présence d'une attaque a été détectée, le procédé se poursuit à l'étape E60 décrite précédemment.

## Revendications

1. Procédé de filtrage de flux d'attaque visant un module de connectivité d'un véhicule automobile (5) recevant une pluralité de flux de connexion entrant, le procédé comprenant les étapes suivantes :

   - détermination d'une pluralité d'agrégats, chaque agrégat résultant de la combinaison de la pluralité de flux de connexion entrant pendant une période temporelle prédéfinie (8ti), ladite période temporelle (8ti) considérée pour déterminer chaque agrégat étant différente de celle considérée pour déterminer les autres agrégats, et les périodes temporelles (8ti) considérées pour déterminer la pluralité d'agrégats étant toutes comprises dans une première fenêtre temporelle d'observation ($\Delta t$),
   - détermination d'une pluralité de premiers vecteurs de mesure ($X_i$) associés chacun à l'un desdits agrégats et comprenant des valeurs de premiers paramètres caractéristiques de l'agrégat auquel il est associé,
   - projection de la pluralité de premiers vecteurs de mesure ($X_i$) sur au moins un sous-espace défini par lesdits premiers paramètres caractéristiques,
   - détermination d'un autre agrégat résultant de la combinaison d'une pluralité de flux de connexion entrant pendant une autre période temporelle ($\delta t_{N+1}$), ladite autre période temporelle ($\delta t_{N+1}$) suivant la première fenêtre temporelle d'observation ($\Delta t$),
   - détermination d'un autre premier vecteur de mesure ($X_{N+1}$) associé à l'autre agrégat et comprenant des valeurs de premiers paramètres caractéristiques de l'autre agrégat,
   - projection de l'autre premier vecteur de mesure ($X_{N+1}$) sur au moins un sous-espace défini par lesdits premiers paramètres caractéristiques,
   - détermination d'un score d'anormalité ($S(X)$) en fonction du résultat de la projection de l'autre premier vecteur de mesure ($X_{N+1}$) et de la projection de la pluralité des premiers vecteurs de mesure ($X_i$),

   puis, si le score d'anormalité ($S(X)$) est compris dans une zone de doute quant à la présence de flux d'attaque :

   - détermination d'une pluralité de deuxièmes vecteurs de mesure ($Y_i$) associés chacun à l'un desdits agrégats et comprenant des valeurs d'autres paramètres caractéristiques de l'agrégat auquel il est associé, lesdits autres paramètres caractéristiques étant distincts desdits premiers paramètres caractéristiques,
   - détermination d'un autre deuxième vecteur de mesure ($Y_{N+1}$) associé à l'autre agrégat et comprenant des valeurs d'autres paramètres caractéristiques de l'autre agrégat, et
   - détection de la présence ou de l'absence d'une attaque par analyse de l'autre deuxième vecteur de mesure ($Y_{N+1}$).

2. Procédé de filtrage de flux d'attaque selon la revendication 1, dans lequel, pour déterminer si le score d'anormalité ($S(X)$) est compris dans une zone de doute quant à la présence de flux d'attaque, il est prévu de comparer le score d'anormalité ($S(X)$) à un premier seuil ($th_1$) et à un deuxième seuil ($th_2$).

3. Procédé de filtrage de flux d'attaque selon la revendication 1 ou 2, dans lequel il est prévu de comparer le score d'anormalité *(S(X))* avec un deuxième seuil *(th₂)*, et si le score d'anormalité *(S(X))* est supérieur au deuxième seuil *(th₂)*, la présence d'une attaque est détectée sur l'autre période temporelle $(\delta t_{N+1})$.

4. Procédé de filtrage de flux d'attaque selon l'une quelconque des revendications 1 à 3, dans lequel il est prévu de comparer le score d'anormalité *(S(X))* avec un premier seuil *(th₁)* et, si le score d'anormalité *(S(X))* est inférieur au premier seuil *(th₁)*, l'absence d'attaque est détectée sur l'autre période temporelle $(\delta t_{N+1})$.

5. Procédé de filtrage de flux d'attaque selon l'une quelconque des revendications 1 à 4, comprenant également les étapes suivantes :

   - définition d'une deuxième fenêtre temporelle d'observation (Δt'), ladite deuxième fenêtre temporelle d'observation (Δt') correspondant à la première fenêtre temporelle d'observation (Δt) décalée de ladite autre période temporelle $(\delta t_{N+1})$,
   - détermination d'un nouvel agrégat, le nouvel agrégat résultant de la combinaison de la pluralité de flux de connexion entrant pendant une nouvelle période temporelle $(\delta t_{N+2})$, ladite nouvelle période temporelle $(\delta t_{N+2})$ suivant la deuxième fenêtre temporelle d'observation (Δt'),
   - détermination d'un nouveau premier vecteur de mesure $(X_{N+2})$ associé au nouvel agrégat et comprenant les valeurs des premiers paramètres caractéristiques dudit nouvel agrégat,
   - suppression de la projection d'un premier vecteur de mesure associé à l'agrégat résultant de la combinaison de la pluralité de flux de connexion entrant pendant la période temporelle située dans la première fenêtre temporelle d'observation (Δt) mais exclue de la deuxième fenêtre temporelle d'observation (Δt'),
   - projection du nouveau premier vecteur $(X_{N+2})$ sur au moins ledit sous-espace défini par lesdits premiers paramètres caractéristiques, et
   - détermination d'un nouveau score d'anormalité en fonction du résultat de ladite projection.

6. Procédé de filtrage de flux d'attaque selon l'une quelconque des revendications 1 à 5 dans lequel, il est prévu à l'étape de projection, une projection de la pluralité de premiers vecteurs de mesure $(X_i)$ sur plusieurs sous-espaces, et dans lequel le scores d'anormalité *(S(X))* est déterminé à partir d'une somme de fonctions d'anormalité *(F(X,k))*, une fonction d'anormalité *(F(X,k))* étant déterminée par sous-espace en fonction du résultat de ladite projection de la pluralité de premiers vecteurs de mesure $(X_i)$ et de la projection l'autre premier vecteur de mesure

$(X_{N+1})$ et d'une anormalité moyenne *(A(k))*, l'anormalité moyenne *(A(k))* étant également déterminée à partir de ladite projection de la pluralité de premiers vecteurs de mesure $(X_i)$ et de la projection de l'autre premier vecteur de mesure $(X_{N+1})$.

7. Procédé de filtrage de flux d'attaque selon la revendication 6, comprenant également, si la présence d'une attaque est détectée, les étapes suivantes :

   - comparaison des fonctions d'anormalité *(F(X, k))* déterminées pour tous les sous-espaces,
   - sélection d'au moins un sous-espace ayant la fonction d'anormalité *(F(X, k))* la plus élevée,
   - séparation de l'autre agrégat en une pluralité de flux de connexion séparés,
   - détermination d'une pluralité de vecteurs d'identification de la pluralité de flux de connexion séparés, les vecteurs d'identification comprenant les mêmes premiers paramètres caractéristiques que les premiers vecteurs de mesure $(X_i)$,
   - projection de ladite pluralité de vecteurs d'identification sur ledit au moins un sous-espace sélectionné,
   - identification d'au moins un flux de connexion illégitime, ledit flux de connexion illégitime correspondant au flux de connexion associé à une projection anormale d'un vecteur d'identification, et
   - filtrage du flux de connexion illégitime.

8. Procédé de filtrage de flux d'attaque selon l'une quelconque des revendications 1 à 7, dans lequel un sous-espace est défini par un premier axe et un deuxième axe, le premier axe correspondant à un premier paramètre caractéristique et le deuxième axe correspondant à un deuxième paramètre caractéristique sélectionné parmi les premiers paramètres caractéristiques.

9. Procédé de filtrage de flux d'attaque selon l'une quelconque des revendications 1 à 8, dans lequel l'un au moins des premiers paramètres caractéristiques comprend l'une des données suivantes :

   - le nombre de sources de flux de connexion $(x_1)$,
   - le nombre moyen de sources de flux de connexion par sous-réseau $(x_2)$,
   - la proportion de requête de transmission $(x_3)$,
   - la proportion de requête d'erreurs reçues $(x_4)$,
   - la taille moyenne des requêtes reçues (xs),
   - le temps de vie moyen des requêtes reçues.

10. Procédé de filtrage de flux d'attaque selon l'une quelconque des revendications 1 à 9, dans lequel l'un au moins des autres paramètres caractéristiques comprend l'une des données suivantes :

- la fréquence de succès liée à l'accès à un premier niveau de mémoire cache,
- la fréquence de succès liée à l'accès à un deuxième niveau de mémoire cache,
- la fréquence d'échec liée à l'accès à un autre niveau de mémoire cache,
- la proportion de mémoire utilisée.

11. Dispositif de filtrage de flux d'attaque visant un module de connectivité d'un véhicule automobile (5) parmi une pluralité de flux de connexion entrant, comportant :

- un module de détermination d'une pluralité d'agrégats, chaque agrégat résultant de la combinaison de la pluralité de flux de connexion entrant pendant une période temporelle prédéfinie (δti), ladite période temporelle (δti) considérée pour déterminer chaque agrégat étant différente de celle considérée pour déterminer les autres agrégats, et les périodes temporelles (δti) considérées pour déterminer la pluralité d'agrégats étant toutes comprises dans une première fenêtre temporelle d'observation (Δt),
- un module de détermination d'une pluralité de premiers vecteurs de mesure ($X_i$) associés chacun à l'un desdits agrégats et comprenant des premiers paramètres caractéristiques de l'agrégat auquel il est associé,
- un module de projection de la pluralité de premiers vecteurs de mesure ($X_i$) sur au moins un sous-espace défini par lesdits premiers paramètres caractéristiques,
- un module de détermination d'un autre agrégat résultant de la combinaison d'une pluralité de flux de connexion entrant pendant une autre période temporelle ($δt_{N+1}$), ladite autre période temporelle ($δt_{N+1}$) suivant la première fenêtre temporelle d'observation (Δt),
- un module de détermination d'un autre premier vecteur de mesure ($X_{N+1}$) associé à l'autre agrégat et comprenant des valeurs de premiers paramètres caractéristiques de l'autre agrégat,
- un module de projection de l'autre premier vecteur de mesure ($X_{N+1}$) sur au moins un sous-espace défini par lesdits premiers paramètres caractéristiques,
- un module de détermination d'un score d'anormalité *(S(X))* en fonction du résultat de la projection de l'autre premier vecteur de mesure ($X_{N+1}$) et de la projection de la pluralité des premiers vecteurs de mesure ($X_i$),
- un module de détermination adapté à déterminer, si le score d'anormalité *(S(X))* est compris dans une zone de doute quant à la présence de flux d'attaque une pluralité de deuxièmes vecteurs de mesure ($Y_i$) associés chacun à l'un desdits agrégats et comprenant d'autres paramètres caractéristiques de l'agrégat auquel il est associé, lesdits autres paramètres caractéristiques étant distincts desdits premiers paramètres caractéristiques,
- un module de détermination d'un autre deuxième vecteur de mesure ($Y_{N+1}$) associé à l'autre agrégat et comprenant des valeurs d'autres paramètres caractéristiques de l'autre agrégat, et
- un module de détection de la présence ou de l'absence d'une attaque par analyse de l'autre deuxième vecteur de mesure ($Y_{N+1}$).

**Patentansprüche**

1. Verfahren zum Filtern eines Angriffsstroms, der auf ein Konnektivitätsmodul eines Kraftfahrzeugs (5) abzielt, das eine Vielzahl von eingehenden Verbindungsströmen empfängt, wobei das Verfahren die folgenden Schritte enthält:

- Bestimmung einer Vielzahl von Aggregaten, wobei jedes Aggregat aus der Kombination der Vielzahl von eingehenden Verbindungsströmen während einer vordefinierten Zeitdauer ($δt_i$) resultiert, wobei die berücksichtigte Zeitdauer ($δt_i$) zur Bestimmung jedes Aggregats sich von derjenigen unterscheidet, die zur Bestimmung der anderen Aggregate berücksichtigt wird, und die berücksichtigten Zeitdauern ($δt_i$) zur Bestimmung der Vielzahl von Aggregaten alle in einem ersten Beobachtungszeitfenster (Δt) enthalten sind,
- Bestimmung einer Vielzahl erster Messvektoren ($X_i$), die je einem der Aggregate zugeordnet sind und Werte erster charakteristischer Parameter des Aggregats enthalten, dem er zugeordnet ist,
- Projektion der Vielzahl erster Messvektoren ($X_i$) auf mindestens einen durch die ersten charakteristischen Parameter definierten Unterraum,
- Bestimmung eines anderen Aggregats, das aus der Kombination einer Vielzahl eingehender Verbindungsströme während einer anderen Zeitdauer ($δt_{N+1}$) resultiert, wobei die andere Zeitdauer ($δt_{N+1}$) dem ersten Beobachtungszeitfenster (Δt) folgt,
- Bestimmung eines anderen ersten Messvektors ($X_{N+1}$), der dem anderen Aggregat zugeordnet ist und Werte erster charakteristischer Parameter des anderen Aggregats enthält,
- Projektion des anderen ersten Messvektors ($X_{N+1}$) auf mindestens einen durch die ersten charakteristischen Parameter definierten Unterraum,
- Bestimmung eines Abnormitätswerts (S(X)) abhängig vom Ergebnis der Projektion des anderen ersten Messvektors ($X_{N+1}$) und der Projektion der Vielzahl der ersten Messvektoren ($X_i$),

dann, falls der Abnormitätswert ($S(X)$) in einer Zweifelzone bezüglich des Vorhandenseins eines Angriffsstroms enthalten ist:

- Bestimmung einer Vielzahl zweiter Messvektoren ($Y_i$) , die je einem der Aggregate zugeordnet sind und Werte anderer charakteristischer Parameter des Aggregats enthalten, dem er zugeordnet ist, wobei die anderen charakteristischen Parameter sich von den ersten charakteristischen Parametern unterscheiden,
- Bestimmung eines anderen zweiten Messvektors ($Y_{N+1}$), der dem anderen Aggregat zugeordnet ist und Werte anderer charakteristischer Parameter des anderen Aggregats enthält, und
- Erfassung des Vorhandenseins oder der Abwesenheit eines Angriffs durch Analyse des anderen zweiten Messvektors ($Y_{N+1}$) .

2. Verfahren zum Filtern eines Angriffsstroms nach Anspruch 1, wobei zur Bestimmung, ob der Abnormitätswert ($S(X)$) in einer Zweifelzone bezüglich des Vorhandenseins eines Angriffsstroms enthalten ist, vorgesehen ist, den Abnormitätswert ($S(X)$) mit einer ersten Schwelle ($th_1$) und mit einer zweiten Schwelle ($th_2$) zu vergleichen.

3. Verfahren zum Filtern eines Angriffsstroms nach Anspruch 1 oder 2, wobei vorgesehen ist, den Abnormitätswert ($S(X)$) mit einer zweiten Schwelle ($th_2$) zu vergleichen, und wenn der Abnormitätswert ($S(X)$) höher ist als die zweite Schwelle (*$th_2$*), wird das Vorhandensein eines Angriffs in der anderen Zeitdauer ($\delta t_{N+1}$) erfasst.

4. Verfahren zum Filtern eines Angriffsstroms nach einem der Ansprüche 1 bis 3, wobei vorgesehen ist, den Abnormitätswert ($S(X)$) mit einer ersten Schwelle ($th_1$) zu vergleichen, und wenn der Abnormitätswert ($S(X)$) niedriger ist als die erste Schwelle ($th_1$), wird die Abwesenheit eines Angriffs in der anderen Zeitdauer ($\delta t_{N+1}$) erfasst.

5. Verfahren zum Filtern eines Angriffsstroms nach einem der Ansprüche 1 bis 4, das ebenfalls die folgenden Schritte enthält:

- Definition eines zweiten Beobachtungszeitfensters ($\Delta t'$), wobei das zweite Beobachtungszeitfenster ($\Delta t'$) dem ersten Beobachtungszeitfenster ($\Delta t$) versetzt um die andere Zeitdauer ($\delta t_{N+1}$) entspricht,
- Bestimmung eines neuen Aggregats, wobei das neue Aggregat aus der Kombination der Vielzahl von eingehenden Verbindungsströmen während einer neuen Zeitdauer ($\delta t_{N+2}$) resultiert, wobei die neue Zeitdauer ($\delta t_{N+2}$) dem zweiten Beobachtungszeitfenster ($\Delta t'$) folgt,
- Bestimmung eines neuen ersten Messvektors ($X_{N+2}$) , der dem neuen Aggregat zugeordnet ist und die Werte der ersten charakteristischen Parameter des neuen Aggregats enthält,
- Entfernen der Projektion eines ersten Messvektors, der dem Aggregat zugeordnet ist, das aus der Kombination der Vielzahl von eingehenden Verbindungsströmen während der Zeitdauer resultiert, die sich im ersten Beobachtungszeitfenster ($\Delta t$) befindet, aber aus dem zweiten Beobachtungszeitfenster ($\Delta t'$) ausgeschlossen ist,
- Projektion des neuen ersten Vektors ($X_{N+2}$) auf mindestens den durch die ersten charakteristischen Parameter definierten Unterraum, und
- Bestimmung eines neuen Abnormitätswerts abhängig vom Ergebnis der Projektion.

6. Verfahren zum Filtern eines Angriffsstroms nach einem der Ansprüche 1 bis 5, wobei im Projektionsschritt eine Projektion der Vielzahl erster Messvektoren ($X_i$) auf mehrere Unterräume vorgesehen ist, und wobei der Abnormitätswert ($S(X)$) ausgehend von einer Summe von Abnormitätsfunktionen ($F(X,k)$) bestimmt wird, wobei eine Abnormitätsfunktion ($F(X,k)$) pro Unterraum abhängig vom Ergebnis der Projektion der Vielzahl erster Messvektoren ($X_i$) und der Projektion des anderen ersten Messvektors ($X_{N+1}$) und einer mittleren Abnormität ($A(k)$) bestimmt wird, wobei die mittlere Abnormität ($A(k)$) ebenfalls ausgehend von der Projektion der Vielzahl erster Messvektoren ($X_i$) und der Projektion des anderen ersten Messvektors ($X_{N+1}$) bestimmt wird.

7. Verfahren zum Filtern eines Angriffsstroms nach Anspruch 6, das ebenfalls, wenn das Vorhandensein eines Angriffs erfasst wird, die folgenden Schritte enthält:

- Vergleich der für alle Unterräume bestimmten Abnormitätsfunktionen ($F(X,k)$),
- Auswahl mindestens eines Unterraums, der die höchste Abnormitätsfunktion ($F(X,k)$) hat,
- Trennung des anderen Aggregats in eine Vielzahl von getrennten Verbindungsströmen,
- Bestimmung einer Vielzahl von Identifikationsvektoren der Vielzahl getrennter Verbindungsströme, wobei die Identifikationsvektoren die gleichen ersten charakteristischen Parameter enthalten wie die ersten Messvektoren ($X_i$),
- Projektion der Vielzahl von Identifikationsvektoren auf den mindestens einen ausgewählten Unterraum,
- Identifizierung mindestens eines unrechtmäßigen Verbindungsstroms, wobei der unrechtmäßige Verbindungsstrom dem einer anormalen Projektion eines Identifikationsvektors zugeordneten Verbindungsstrom entspricht, und

- Filtern des unrechtmäßigen Verbindungsstroms.

8. Verfahren zum Filtern eines Angriffsstroms nach einem der Ansprüche 1 bis 7, wobei ein Unterraum von einer ersten und einer zweiten Achse definiert wird, wobei die erste Achse einem ersten charakteristischen Parameter und die zweite Achse einem zweiten charakteristischen Parameter entspricht, der aus den ersten charakteristischen Parametern ausgewählt wird.

9. Verfahren zum Filtern eines Angriffsstroms nach einem der Ansprüche 1 bis 8, wobei mindestens einer der ersten charakteristischen Parameter einen der folgenden Datenwerte enthält:

- die Anzahl von Verbindungsstromquellen ($x_1$),
- die mittlere Anzahl von Verbindungsstromquellen pro Teilnetz ($x_2$),
- der Übertragungsanforderungsanteil ($x_3$),
- der Anforderungsanteil empfangener Fehler ($x_4$),
- die mittlere Größe der empfangenen Anforderungen ($x_5$),
- die mittlere Lebensdauer der empfangenen Anforderungen.

10. Verfahren zum Filtern eines Angriffsstroms nach einem der Ansprüche 1 bis 9, wobei mindestens einer der anderen charakteristischen Parameter einen der folgenden Datenwerte enthält:

- die Erfolgshäufigkeit verbunden mit dem Zugang zu einer ersten Cache-Speicherebene,
- die Erfolgshäufigkeit verbunden mit dem Zugang zu einer zweiten Cache-Speicherebene,
- die Fehlschlaghäufigkeit verbunden mit dem Zugang zu einer anderen Cache-Speicherebene,
- der verwendete Speicheranteil.

11. Vorrichtung zum Filtern eines Angriffsstroms, der auf ein Konnektivitätsmodul eines Kraftfahrzeugs (5) abzielt, unter einer Vielzahl von eingehenden Verbindungsströmen, die aufweist:

- ein Bestimmungsmodul einer Vielzahl von Aggregaten, wobei jedes Aggregat aus der Kombination der Vielzahl von eingehenden Verbindungsströmen während einer vordefinierten Zeitdauer ($\delta t_i$) resultiert, wobei die zur Bestimmung jedes Aggregats berücksichtigte Zeitdauer ($\delta t_i$) anders als diejenige ist, die zur Bestimmung der anderen Aggregate berücksichtigt wird, und die Zeitdauern ($\delta t_i$), die zur Bestimmung der Vielzahl von Aggregaten berücksichtigt werden, alle in einem ersten Beobachtungszeitfenster ($\Delta t$) enthalten sind,

- ein Bestimmungsmodul einer Vielzahl erster Messvektoren ($X_i$), die je einem der Aggregate zugeordnet sind und erste charakteristische Parameter des Aggregats enthalten, dem er zugeordnet ist,

- ein Projektionsmodul der Vielzahl erster Messvektoren ($X_i$) auf mindestens einen von den ersten charakteristischen Parametern definierten Unterraum,

- ein Bestimmungsmodul eines anderen Aggregats, das aus der Kombination einer Vielzahl eingehender Verbindungsströme während einer anderen Zeitdauer ($\delta t_{N+1}$) resultiert, wobei die andere Zeitdauer ($\delta t_{N+1}$) dem ersten Beobachtungszeitfenster ($\Delta t$) folgt,

- ein Bestimmungsmodul eines anderen erstem Messvektors ($X_{N+1}$), der dem anderen Aggregat zugeordnet ist und Werte erster charakteristischer Parameter des anderen Aggregats enthält,

- ein Projektionsmodul des anderen ersten Messvektors ($X_{N+1}$) auf mindestens einen Unterraum, der von den ersten charakteristischen Parametern definiert wird,

- ein Bestimmungsmodul eines Abnormitätswerts ($S(X)$) abhängig vom Ergebnis der Projektion des anderen ersten Messvektors ($X_{N+1}$) und der Projektion der Vielzahl der ersten Messvektoren ($X_i$),

- ein Bestimmungsmodul das geeignet ist, wenn der Abnormitätswert ($S(X)$) in einer Zweifelzone bezüglich des Vorhandenseins eines Angriffsstroms enthalten ist, eine Vielzahl zweiter Messvektoren ($Y_i$) zu bestimmen, die je einem der Aggregate zugeordnet sind und andere charakteristische Parameter des Aggregats enthalten, dem er zugeordnet ist, wobei die anderen charakteristischen Parameter sich von den ersten charakteristischen Parametern unterscheiden,

- ein Bestimmungsmodul eines anderen zweiten Messvektors ($Y_{N+1}$), der dem anderen Aggregat zugeordnet ist und Werte anderer charakteristischer Parameter des anderen Aggregats enthält, und

- ein Erfassungsmodul des Vorhandenseins oder der Abwesenheit eines Angriffs durch Analyse des anderen zweiten Messvektors ($Y_{N+1}$).

**Claims**

1. Method for filtering attack flows targeting a connectivity module of a motor vehicle (5) receiving a plurality of connection inflows, the method comprising the following steps:

- determining a plurality of aggregates, each aggregate resulting from the combination of the plurality of connection inflows received during a predefined time period ($\delta t_i$), said time period ($\delta t_i$) considered to determine each aggregate being different from that considered to determine the other aggregates, and the time periods ($\delta t_i$) considered to determine the plurality of aggregates all being comprised in a first observation time window ($\Delta t$) ,
- determining a plurality of first measurement vectors ($X_i$) that are each associated with one of said aggregates and that contain values of first characteristic parameters of the aggregate with which it is associated,
- projecting the plurality of first measurement vectors ($X_i$) into at least one sub-space defined by said first characteristic parameters,
- determining another aggregate resulting from the combination of a plurality of connection inflows received during another time period ($\delta t_{N+1}$), said other time period ($\delta t_{N+1}$) following the first observation time window ($\Delta t$) ,
- determining another first measurement vector ($X_{N+1}$) that is associated with the other aggregate and that contains values of first characteristic parameters of the other aggregate,
- projecting the other first measurement vector **($X_{N+1}$)** into at least one sub-space defined by said first characteristic parameters,
- determining an abnormality score **(S(X))** depending on the result of the projection of the other first measurement vector **($X_{N+1}$)** and of the projection of the plurality of first measurement vectors **($X_i$),**

then, if the abnormality score **(S(X))** is comprised in a zone of doubt as to the presence of attack flows:

- determining a plurality of second measurement vectors **($Y_i$)** that are each associated with one of said aggregates and that contain values of other characteristic parameters of the aggregate with which it is associated, said other characteristic parameters being distinct from said first characteristic parameters,
- determining another second measurement vector **($Y_{N+1}$)** that is associated with the other aggregate and that contains values of other characteristic parameters of the other aggregate, and
- detecting the presence or absence of an attack by analyzing the other second measurement vector **($Y_{N+1}$).**

2. Method for filtering attack flows according to Claim 1, wherein, to determine whether the abnormality score *(S(X))* is comprised in a zone of doubt as to the presence of attack flows, provision is made to compare the abnormality score *(S(X))* to a first threshold **($th_1$)** and to a second threshold **($th_2$)** .

3. Method for filtering attack flows according to Claim 1 or 2, wherein provision is made to compare the abnormality score *(S(X))* with a second threshold **($th_2$)**, and if the abnormality score *(S(X))* is higher than the second threshold **($th_2$)**, the presence of an attack is detected in the other time period ($\delta t_{N+1}$).

4. Method for filtering attack flows according to any one of Claims 1 to 3, wherein provision is made to compare the abnormality score *(S(X))* with a first threshold ($th_1$) , and if the abnormality score **(S(X))** is lower than the first threshold ($th_1$) , the absence of an attack is detected in the other time period ($\delta t_{N+1}$)\.

5. Method for filtering attack flows according to any one of Claims 1 to 4, also comprising the following steps:

- defining a second observation time window **($\Delta t'$),** said second observation time window **($\Delta t'$)** corresponding to the first observation time window ($\Delta t$) shifted by said other time period ($\delta t_{N+1}$),
- determining a new aggregate, the new aggregate resulting from the combination of the plurality of connection inflows received during a new time period **($\delta t_{N+2}$),** said new time period **($\delta t_{N+2}$)** following the second observation time window **($\Delta t'$),**
- determining a new first measurement vector **($X_{N+2}$)** that is associated with the new aggregate and that contains the values of the first characteristic parameters of said new aggregate,
- deleting the projection of a first measurement vector associated with the aggregate resulting from the combination of the plurality of connection inflows received during the time period located in the first observation time window ($\Delta t$) but outside the second observation time window **($\Delta t'$),**
- projecting the new first vector **($X_{N+2}$)** into at least said sub-space defined by said first characteristic parameters, and
- determining a new abnormality score depending on the result of said projection.

6. Method for filtering attack flows according to any one of Claims 1 to 5, wherein provision is made, in the projecting step, to project the plurality of first measurement vectors **($X_i$)** into a plurality of sub-spaces, and wherein the abnormality score (S(X)) is determined from a sum of abnormality functions (*F(X,k)*), one abnormality function *(F(X,k))* being determined per sub-space depending on the result of said projection of the plurality of first measurement vectors $(X_i)$ and of the projection of the other first measurement vector $(X_{N+1})$ and on an average abnormality *(A(k))*, the average abnormality *(A(k))* also being determined from said projection of the plurality of first measurement vectors $(X_i)$ and from the projection of the other first measurement vector $(X_{N+1})$.

7. Method for filtering attack flows according to Claim 6, also comprising, if the presence of an attack is detected, the following steps:

> - comparing the abnormality functions *(F(X,k))* determined for all the sub-spaces,
> - selecting at least one sub-space having the highest abnormality function *(F(X,k))*,
> - separating the other aggregate into a plurality of separate connection flows,
> - determining a plurality of identification vectors of the plurality of separate connection flows, the identification vectors containing the same first characteristic parameters as the first measurement vectors $(X_i)$,
> - projecting said plurality of identification vectors into said at least one selected sub-space,
> - identifying at least one illegitimate connection flow, said illegitimate connection flow corresponding to the connection flow associated with an abnormal projection of an identification vector, and
> - filtering the illegitimate connection flow.

8. Method for filtering attack flows according to any one of Claims 1 to 7, wherein a sub-space is defined by a first axis and a second axis, the first axis corresponding to a first characteristic parameter and the second axis corresponding to a second characteristic parameter selected from the first characteristic parameters.

9. Method for filtering attack flows according to any one of Claims 1 to 8, wherein at least one of the first characteristic parameters comprises one of the following data:

> - the number of connection-flow sources $(x_1)$,
> - the average number of connection-flow sources per sub-network $(x_2)$,
> - the proportion of transmission requests $(x_3)$,
> - the proportion of received error requests $(x_4)$,
> - the average size of the received requests $(x_5)$,
> - the average lifetime of the received requests.

10. Method for filtering attack flows according to any one of Claims 1 to 9, wherein at least one of the other characteristic parameters comprises one of the following data:

> - the hit rate associated with access to a first cache-memory level,
> - the hit rate associated with access to a second cache-memory level,
> - the miss rate associated with access to another cache-memory level,
> - the proportion of memory used.

11. Device for filtering attack flows targeting a connectivity module of a motor vehicle (5) from a plurality of connection inflows, comprising:

> - a module for determining a plurality of aggregates, each aggregate resulting from the combination of the plurality of connection inflows received during a predefined time period $(\delta t_i)$, said time period $(\delta t_i)$ considered to determine each aggregate being different from that considered to determine the other aggregates, and the time periods $(\delta t_i)$ considered to determine the plurality of aggregates all being comprised in a first observation time window $(\Delta t)$,
> - a module for determining a plurality of first measurement vectors $(X_i)$ that are each associated with one of said aggregates and that contain first characteristic parameters of the aggregate with which it is associated,
> - a module for projecting the plurality of first measurement vectors $(X_i)$ into at least one sub-space defined by said first characteristic parameters,
> - a module for determining another aggregate resulting from the combination of a plurality of connection inflows received during another time period $(\delta t_{N+1})$, said other time period $(\delta t_{N+1})$ following the first observation time window $(\Delta t)$,
> - a module for determining another first measurement vector $(X_{N+1})$ that is associated with the other aggregate and that contains values of first characteristic parameters of the other aggregate,
> - a module for projecting the other first measurement vector $(X_{N+1})$ into at least one sub-space defined by said first characteristic parameters,
> - a module for determining an abnormality score *(S(X))* depending on the result of the projection of the other first measurement vector $(X_{N+1})$ and of the projection of the plurality of first measurement vectors $(X_i)$,
> - a determining module suitable for determining, if the abnormality score *(S(X))* is comprised in a zone of doubt as to the presence of attack flows, a plurality of second measurement vectors $(Y_i)$ that are each associated with one of said aggregates and that contain other characteristic parameters of the aggregate with which it is associated, said other characteristic parameters being distinct from said first characteristic parameters,

- a module for determining another second measurement vector $(Y_{N+1})$ that is associated with the other aggregate and that contains values of other characteristic parameters of the other aggregate, and

- a module for detecting the presence or absence of an attack by analyzing the other second measurement vector $(Y_{N+1})$.

**Fig.1**

10

1

2

5

E2

E4

E6

E8

E10

E12

E14

**Fig.2**

E20

E22

E24

E26

E40

E42

E60

E62

E64

E66

E68

E70

E72

E74

## Fig.3

## Fig.4

## Fig.5

## Fig.6

EP 3 782 345 B1

**Fig.7**

**Fig.8**

**Fig.9**

**Fig.10**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- *UNADA: Unsupervised Network Anomaly Détection Using Sub-space Outliers Ranking,* 2011